# EUROPÄISCHE PATENTSCHRIFT

(11) **EP 3 341 296 B1**
(45) Veröffentlichungstag und Bekanntmachung des Hinweises auf die Patenterteilung: **17.03.2021**
(21) Anmeldenummer: 16753918.8
(22) Anmeldetag: 19.08.2016
(51) Int. Cl.: B65B 51/20, B65B 65/00, B29C 65/10

(54) **VORRICHTUNG UMFASSEND EINE HEIZEINHEIT ZUM AUFHEIZEN VON PACKUNGSMÄNTELN UND DAS ENTSPRECHENDE VERFAHREN**
DEVICE COMPRISING A HEATING UNIT FOR HEATING PACKAGING SLEEVES AND THE CORRESPONDING METHOD
DISPOSITIF COMPRENANT UNE UNITÉ DE CHAUFFE POUR CHAUFFER DES CORPS D'EMBALLAGE ET PROCÉDÉ CORRESPONDANT

(30) Priorität: 28.08.2015 DE 102015114380
(43) Veröffentlichungstag der Anmeldung: 04.07.2018
(73) Patentinhaber: SIG Technology AG, 8212 Neuhausen am Rheinfall (CH)
(72) Erfinder: HEIL, Michael, 41179 Mönchengladbach (DE)
(74) Vertreter: Cohausz & Florack
(86) Internationale Anmeldenummer: PCT/EP2016/069686
(87) Internationale Veröffentlichungsnummer: WO 2017/036817

(56) Entgegenhaltungen:
- EP-A2- 0 832 732
- EP-A2- 0 938 965
- DE-A1- 1 786 440
- DE-A1- 3 740 426
- JP-A- 2008 296 918
- JP-U- H02 138 103
- US-A- 3 668 369

## Beschreibung

Die Erfindung betrifft eine Vorrichtung zum Befüllen von Packungen, insbesondere mit fließfähigen Lebensmitteln, mit einer Heizeinheit zum wenigstens partiellen Aufheizen von zu siegelnden Endbereichen von Packungsmänteln mit Heißluft, mit einer Siegeleinheit zum flüssigkeitsdichten Schließen und Verschweißen der Endbereiche der aufgeheizten Packungsmäntel und mit einer Fülleinrichtung zum Befüllen wenigstens einseitig geschlossener Packungsmäntel, wobei die Heizeinheit wenigstens zwei Heizeinrichtungen zum wenigstens partiellen Aufheizen von zu siegelnden Endbereichen von Packungsmänteln mit Heißluft umfasst, wobei die Heizeinheit eine Luftzuführeinrichtung zum Zuführen von aufzuheizender Luft zu den Heizeinrichtungen aufweist, wobei die Heizeinrichtungen jeweils ein Heizelement zum Erzeugen von Heißluft und eine Düseneinheit zum Anblasen des Endbereichs des Packungsmantels mit der in der Heizeinrichtung erzeugten Heißluft aufweisen. Ferner betrifft die Erfindung ein Verfahren zum Formen von Packungen, insbesondere Kartonverbundverpackungen.

Es sind unterschiedliche Vorrichtungen zum Füllen von Packungen mit Produkten, insbesondere in Form von Lebensmitteln, bekannt. Dabei werden die Packungen vorzugsweise mit fließfähigen Lebensmitteln gefüllt. Als Packungen werden insbesondere Packungen verwendet, die an einer Oberseite offen sind, um eine Öffnung zum Befüllen bereitzustellen. Die Packungen können beispielsweise Kartonverbundverpackungen sein, die aus einem Packstoff in Form eines Laminats umfassend eine Kartonschicht und äußeren, insbesondere thermoplastischen, Kunststoffschichten, etwa aus Polyethylen (PE), gebildet sind. Der Karton verleiht den Packungen eine ausreichende Stabilität, damit die Packungen einfach gehandhabt und beispielsweise gestapelt werden können. Die Kunststoffschichten schützen den Karton vor Feuchtigkeit und erlauben ein Siegeln des Packstoffs zur Bildung einer dichten Packung. Zusätzlich können noch weitere Schichten, wie etwa eine Aluminiumschicht, vorgesehen sein, die eine Diffusion von Sauerstoff und anderen Gasen durch die Packung verhindert. Eine Vorrichtung und eine Verfahren, der eingangs genannten Art ist aus der DE 1786440 A1 bekannt.

Die Packungen können, vorzugsweise in einer Füllmaschine, aus einem Packungsvorläufer gefertigt werden. Als Packungsvorläufer können beispielsweise Packstoffzuschnitte aus Packstoff verwendet werden, die bedarfsweise vorkonfektioniert sein können, und zwar beispielsweise durch Siegeln von Längskanten zu einem Packungsrohling in Form eines Packungsmantels. Entsprechende Packungsmäntel werden typischerweise auf Dornen eines sogenannten Dornrades aufgezogen, wobei der Querschnitt der Dornen dem inneren Querschnitt des Packungsmantels entspricht, der zunächst über den Dorn nach außen vorsteht. Dieser vorstehende Bereich des Packungsmantels wird durch eine Heizeinheit mittels Heißluft erhitzt, um den Endbereiche des Packungsmantels, insbesondere den Bodenbildungsbereich oder den Giebelbildungsbereich des Packungsmantels, zu aktivieren. Dabei wird die Temperatur des Packungsmantels wenigstens abschnittsweise soweit angehoben, dass die äußere Kunststoffschicht, bei der es sich typischerweise um ein Thermoplast, insbesondere Polyolefin, weiter vorzugsweise um Polyethylen, handelt, gesiegelt also verschweißt werden kann. Dies erfolgt dabei vorzugsweise jeweils mit anderen aktivierten Bereichen des entsprechenden Endbereichs des Packungsmantels. Dabei wird der Endbereich des Packungsmantels gegen die Stirnseite des Dorns gefaltet und dort verpresst. Nach dem Abkühlen des Packungsmantels entsteht auf diese Weise ein flüssigkeitsdichter Packungsboden oder Packungskopf. Da dies für das Verfahren des Füllens von Packungen grundsätzlich keinen nennenswerten Unterschied macht, wird im Folgenden als Boden der Packung insbesondere der beim Füllen nach unten weisende, verschlossene und als Kopf der Packung insbesondere der beim Füllen noch unverschlossene obere Teil der Packung angesehen. In welcher Ausrichtung die Packung jedoch nach dem Füllen und endgültigen Verschließen gehandhabt wird, wo also bei der Verpackung letztlich oben oder unten ist, ist für die von der Erfindung zu lösende Aufgabe nicht von grundlegender Bedeutung. Mit anderen Worten macht es keinen großen Unterschied, ob die Packungen durch den noch offenen Bodenbereich oder den noch offenen Kopfbereich der Packung gefüllt wird.

Zum Füllen werden die einseitig offenen Packungen in eine Sterilisationszone der Füllmaschine eingeschleust, etwa indem die Packungen nacheinander in Zellen einer Transporteinrichtung eingeführt werden. Die Packungen werden dann mit definierter Geschwindigkeit und in definiertem Abstand zueinander durch die Sterilisationszone der Füllmaschine transportiert werden, wo die Packungen bedarfsweise mit heißer Sterilluft vorgewärmt werden, bevor eine Sterilisiation der Packungen, beispielsweise mit Wasserstoffperoxid, und bedarfsweise eine Trocknung mit Sterilluft erfolgt. Die sterilisierten Packungen werden dann in die Füll- und Siegelzone übergeben und dort vorzugsweise mit einem fließfähigen Lebensmittel, wie beispielsweise einem Getränk befüllt. Anschließend wird die Packung noch verschlossen, über die Transporteinrichtung aus der Füll- und Siegelzone transportiert und letztlich aus den Zellen der Transporteinrichtung entnommen.

In einigen Füllmaschinen werden die Packungen von der Transporteinrichtung in einer geraden Linie durch die Füllmaschine transportiert. Entsprechende Füllmaschinen werden auch als Langläufer bezeichnet. In anderen Fülleinrichtungen, den sogenannten Rundläufern, beschreiben die Packungen eine mehr oder weniger bogenförmige Bewegung, die einen Kreisbogenabschnitt oder mehrere Kreisbogenabschnitte umfassen kann.

Heizeinheiten bekannter Füllmaschinen weisen meist eine Mehrzahl von Heizeinrichtungen auf, da in Füllmaschinen typischerweise mehrere Dornräder parallel nebeneinander betrieben werden. Meist handelt es sich um vier oder sechs parallele Dornräder. Jede Heizeinrichtung dient dann dem parallelen Aufheizen eines anderen Packungsmantels, insbesondere des jeweils zu siegelnden Endbereichs, bei dem es sich wahlweise um den späteren Boden oder den spätere Kopf der Packung handeln kann. Um den Heizeinrichtungen die aufzuheizende Luft zuzuführen, sind meist einzelne Gruppen von Heizeinrichtungen mit einer Luftzuführeinrichtung verbunden. Die aufzuheizende Luft wird dann in den Heizeinrichtungen separat durch Heizelemente, etwa in Form von Heizkartuschen, auf etwa 300°C bis 400°C aufgeheizt. Sodann wird die Heißluft über Düseneinheiten gezielt auf die Endebereiche der Packungsmäntel geblasen. Der Packstoff der Packungsmäntel kann aufgrund der hohen Temperaturen in sehr kurzer Zeit derart aktiviert werden, insbesondere erweichen, so dass der Packstoff gesiegelt und der entsprechende Endbereich des Packungsmantels geschlossen werden kann.

In der Praxis ist es jedoch schwierig, eine exakte und zuverlässige Aktivierung der zu erhitzenden Enden der Packungsmäntel über einen längeren Zeitraum zu erreichen. Über längere Zeiträume hinweg kommt es immer wieder zu Ungenauigkeiten bei dem Erhitzen der Endbereiche der Packungsmäntel. Der Packstoff wird beispielsweise lokal überaktiviert oder unzureichend aktiviert, was daran liegen kann, dass die Distanz des Packstoffs zum Austritt der Heißluft aus der Düseneinheit etwas zu gering oder etwas zu groß ist. Die übermäßige oder unzureichende Aktivierung des Packstoffs kann jedenfalls dazu führen, dass keine ausreichende Dichtheit des versiegelten Endbereichs erzielt wird. Dabei kann bereits nach dem Füllen Flüssigkeit aus der Verpackung austreten. Es kann aber auch vorkommen, dass der versiegelte Endbereich erst später durch eine erhöhte mechanische Belastung undicht wird.

Daher liegt der vorliegenden Erfindung die Aufgabe zugrunde die Heizeinheit, die Vorrichtung und das Verfahren jeweils der eingangs genannten und zuvor näherbeschriebenen Art derart auszugestalten und weiterzubilden, dass die Dichtheit der versigelten Endbereiche der Packungsmäntel gesteigert werden kann, ohne dazu einen übermäßigen apparativen Aufwand und/oder Verfahrensaufwand in Kauf nehmen zu müssen.

Diese Aufgabe ist durch eine Vorrichtung gemäß Anspruch 1 gelöst.

Ferner ist die zuvor genannte Aufgabe durch ein Verfahren gemäß Anspruch 14 gelöst.

Durch die separate Halterung der Heizeinrichtungen an der Luftzuführeinrichtung kann eine ausgeprägte thermische Trennung der Heizeinrichtungen untereinander erfolgen. Die Luftzuführeinrichtung wird dabei nicht nur zum Zuführen der aufzuheizenden Luft genutzt, sondern auch zum Festlegen und Fixieren der Heizeinrichtungen. Somit sind die Heizeinrichtungen in einem wesentlichen Maße über die Luftzuführeinrichtung verbunden. Die Luftzuführeinrichtung ist im Betrieb der Heizeinheit durch die Durchströmung mit aufzuheizender Luft von innen gekühlt und kann so die von den Heizeinrichtungen über Wärmeleitung an die Luftzuführeinrichtung abgegebene Wärme sehr gut ableiten. Die Wärme wird also nicht oder nur geringfügig von einer Heizeinrichtung auf andere Bereiche der Heizeinheit, oder gar an angrenzende Heizeinrichtungen, übertragen. Damit wird auch eine thermische Beeinflussung einzelner Heizeinrichtungen untereinander durch eine thermische Ausdehnung der Heizeinheit als solcher weitestgehend vermieden. Im Ergebnis bleibt der voreingestellte Abstand der Heizeinrichtungen untereinander auch über einen längeren Betriebszeitraum im Wesentlichen erhalten.

Die von der aufzuheizenden Luft aufgenommene Wärme wird zudem infolge der Strömungsrichtung der Luft in Richtung der Heizeinrichtungen zurückgeleitet und über die Heizeinrichtungen abgeführt, was die thermische Entlastung der Heizeinheit insgesamt begünstigt und eine Beeinträchtigung der Heizeinrichtungen untereinander verringert. Durch die beschriebene thermische Entkopplung werden thermische Materialausdehnungen vermieden, die dazu führen, dass sich die vorbestimmten Positionen der Düseneinheiten, die zuvor exakt auf die zugehörigen Dornräder und damit auf die zu siegelnden Endebereiche der auf den Dornrädern gehaltenen Packungsmäntel ausgerichtet worden sind, verändern. Schon kleine Veränderungen können die Aktivierung der Packstoffe hin zu einer lokalen Überaktivierung und/oder einer lokal unzureichenden Aktivierung beeinträchtigen.

Die Halterungen, mit denen die Heizeinrichtungen separat mit der Luftzuführeinrichtung verbunden sind, können zudem mit einem verhältnismäßig geringen Materialquerschnitt ausgebildet werden, um die Wärmeleitung über die Halterung an die Luftzuführeinrichtung zu verringern. Als Materialquerschnitt wird dabei der für den Wärmetransport über Wärmeleitung relevanten materialquerschnitt, also insbesondere senkrecht zur Richtung der Wärmeleitung verstanden. Der entsprechende materialquerschnitt kann an unterschiedlichen Stellen der Halterung unterschiedlich sein. Wenigstens ein sehr geringer Materialquerschnitt und/oder große Bereichen mit geringen Materialquerschnitten ist grundsätzlich bevorzugt, um der Wärmeleitung einen möglichst hohen Wärmetransportwiderstand entgegenzusetzen.

Durch die separaten Halteelemente wird folglich auch die Wärmeleitung zwischen den Heizeinrichtungen untereinander begrenzt. Bedarfsweise kann jede Heizeinrichtung auch über mehrere Halterungen an der Luftzuführeinrichtung gehalten sein. Dann kann beispielsweise der Materialquerschnitt der besonders zur Wärmeleitung beitragenden Halterung, die etwa einem besonders heißeren Bereich der Heizeinrichtung angeordnet ist, geringer ausgebildet werden. Um die benötigte mechanische Stabilität sicherzustellen, kann dann eine weitere Halterung genutzt werden, die an einem kälteren Bereich der Heizeinrichtung angeordnet ist. Über den zusätzlichen zur Wärmeleitung beitragende Materialquerschnitt, der folglich beispielsweise im Wesentlichen senkrecht zur Wärmeleitung angeordnet ist, wird somit aufgrund der geringeren Temperaturdifferenz weniger Wärme abgeführt, während über den anderen Materialquerschnitt aufgrund des höheren Wärmeleitungswiderstands eines geringeren Materialquerschnitts ebenfalls weniger Wärme abgeführt wird.

Nachfolgend werden die Heizeinheit, die Vorrichtung zum Befüllen von Packungen und das Verfahren zum Formen von Packungen zur Vermeidung unnötiger Wiederholungen und der besseren Verständlichkeit halber zusammen beschrieben, ohne dass jeweils im Einzelnen zwischen der Heizeinheit, der Vorrichtung und dem Verfahren unterschieden wird. Aus dem Kontext wird für den Fachmann jedoch ersichtlich, welche Merkmale hinsichtlich der Heizeinheit, hinsichtlich der Vorrichtung zum Befüllen von Packungen und hinsichtlich des Verfahrens zum Formen von Packungen jeweils bevorzugt sind.

Die wenigstens einen Halterungen sind über eine Sammelleitung mit der Luftzuführeinrichtung verbunden. Dies ist konstruktiv einfach und erlaubt eine gute thermische Trennung der Heizeinrichtungen untereinander. Die Sammeleinrichtung kann einen großen Volumenstrom an aufzuheizender Luft bereitstellen, der Wärme abtransportiert. Außerdem ist die Sammelleitung grundsätzlich größer und massiver ausgebildet. Daher kann die Sammelleitung mehr Wärme bei geringerer Temperatur speichern. Dies hat den weiteren Vorteil, dass die Sammelleitung eine bessere Pufferwirkung bei Temperaturschwankungen bereitstellen kann. Zudem kann vorgesehen sein, dass die Heizeinrichtungen wenigstens auch über die entsprechenden separaten Halterungen an der Sammelleitung der Luftzuführeinrichtung gehalten sind. Auf dieser Weise können weitere Halterungen zum Halten und Fixieren der Heizeinrichtungen bedarfsweise entfallen oder weniger massiv ausgebildet werden. Eine übermäßige Wärmeleitung über diese zusätzlichen Halterungen kann so verhindert oder jedenfalls vermindert werden.

Die thermische Entkopplung der Heizeinrichtungen untereinander ist dadurch verbessert, dass die Heizelemente der wenigstens zwei Heizeinrichtungen jeweils über die wenigstens eine Halterung in fluider Verbindung zur Luftzuführeinrichtung steht. Es werden also durch die wenigstens einen Halterungen jeweils Kanäle bereitgestellt, die über die Luftzuführeinrichtung mit Luft versorgt werden. Die Luft kann dann durch die Kanäle strömen und die Halterungen dabei entsprechend kühlen. Es wird dann von den Heizeinrichtungen weniger Wärme an die Luftzuführeinrichtung abgegeben. Dieser Vorteil wird noch verstärkt, da die wenigstens zwei Heizeinrichtungen dazu ausgebildet sind, über die Halterung mit aufzuheizender Luft versorgt zu werden. Dann wird die Luft auch zum Erzeugen von Heißluft genutzt und es kann bedarfsweise mehr Luft zur Kühlung durch die Kanäle geleitet werden. Aus Gründen der Kühlung und aus konstruktiver Sicht bietet es sich dabei besonders an, wenn die Heizeinrichtungen ausschließlich die wenigstens einen separaten Halterungen mit aufzuheizender Luft versorgt werden. Zudem kann die entsprechende Vorwärmung der aufzuheizenden Luft beim Durchströmen der wenigstens einen Halterungen zu einer Energieeinsparung für das Bereitstellen der Heißluft führen, weil Wärmeverluste verringert werden.

Die wenigstens einen Halterungen weisen jeweils wenigstens zwei separate und mit einer Sammelleitung der Luftzuführeinrichtung verbundene Kanäle zum Zuführen von aufzuheizender Luft in die Heizeinrichtungen auf. Mehrere Kanäle haben dabei den Vorteil, dass die Wärmeübertragungsfläche zwischen der Luft und der jeweiligen Halterung tendenziell zunimmt. Zu viele Kanäle sind jedoch konstruktiv aufwendig und steigern den Druckverlust beim Durchströmen der Halterungen.

Die Anbindung der Heizeinrichtungen über die wenigstens einen Halterungen an die Luftzuführeinrichtung ist besonders effektiv, wenn die jeweils wenigstens einen Halterungen an einem der Düseneinheit der Heizeinrichtung zugeordneten Bereich, an einem dem Heizelement zugeordneten Bereich der Heizeinrichtung oder an einem beiden Bereichen zugeordneten Bereich der Heizeinrichtungen vorgesehen sind. Dann sind die Halterungen grundsätzlich besonderen thermischen Belastungen ausgesetzt, so dass die zuvor beschriebenen Effekte durch die Anbindung und/oder Ausgestaltung der wenigstens einen Halterungen besonderen Einfluss haben. Dies kann beispielsweise insbesondere dann gelten, wenn die wenigstes einen Halterungen an dem der Düseneinheit zugeordneten Ende des Heizelements oder an einem Bereich der Heizeinrichtung zwischen der Düseneinheit und dem Heizelement, vorgesehen ist. Entsprechende Bereiche sind nämlich bedarfsweise besonders heiß und müssen unter Umständen besonders gut gehalten und fixiert sein, um ein exaktes Aufheizen der Packungsmäntel durch eine exakte Positionierung der Düseneinheiten sicherzustellen.

Um eine sichere Halterung und zuverlässige Fixierung der Heizeinrichtungen sicherzustellen, können die Heizeinrichtungen alternativ oder zusätzlich jeweils separat über wenigstens zwei Halterungen mit der Luftzuführeinrichtung verbunden sein. Durch die wenigstens zwei Halterungen wird beispielsweise einem versehentlichen Verdrehen der Heizeinrichtungen entgegengewirkt. Da beide Halterungen mit der aufzuheizende Luft führenden Luftzuführeinrichtung verbunden sind, kann von den Heizeinrichtungen über die Halterungen nur bedingt Wärme an die Heizeinheit insgesamt oder die angrenzenden Heizeinrichtungen abgegeben werden. Um die Halterungen effizient auszunutzen und bedarfsweise weitere Verbindungen der Heizeinrichtungen entbehrlich zu machen, ist es besonders bevorzugt, wenn die wenigstens zwei Heizeinrichtungen jeweils separat über die wenigstens zwei Halterungen an der Luftzuführeinrichtung gehalten sind. Die Heizeinrichtungen sind somit bedarfsweise an der Luftzuführeinrichtung festgelegt und von gegenüber der Luftzuführeinrichtung abgestützt.

Zur äußeren Kühlung der Heizeinrichtungen etwa im Verbindungsbereich der Halterungen können die Heizeinrichtungen jeweils wenigstens einen Kanal aufweisen, der mit noch aufzuheizender Luft durchströmt werden kann. Der wenigstens eine Kanal befindet sich dabei außerhalb des Heizelements, insbesondere auf wenigstens einer Seite des Heizelements. Besonders zweckmäßig ist es, wenn der wenigstens eine Kanal oder mehrere Kanäle das Heizelement wenigstens teilweise insebsondere wenigstens im Wesentlichen umgreifen. So kann mehr und großflächiger Wärme durch die abzuführende Luft abgeführt werden. Dies gilt umso mehr, wenn der wenigstens eine Kanal wenigstens im Wesentlichen umlaufend zu wenigstens einem Teil des Heizelements angeordnet ist. Dies lässt sich konstruktiv einfach realisieren, wenn ein Ringkanal um das Heizelement ausgebildet wird. Alternativ oder zusätzlich kann das Heizelement so ausgebildet sein, dass noch aufzuheizende Luft in dem wenigstens einen Kanal wenigstens teilweise in eine Richtung geleitet wird, die entgegengesetzt oder wenigstens teilweise entgegengesetzt zu der Strömungsrichtung der Luft durch das Heizelement ausgerichtet ist. Das Heizelement und der wenigstens eine Kanal können dann sozusagen wenigstens teilweise im Gegenstrom betrieben werden. Die Luft strömt also im wenigstens einen Kanal und in dem wenigstens einen Heizelement wenigstens teilweise in entgegengesetzte Richtungen. Anders ausgedrückt weisen die Strömungen in den beiden Abschnitten wenigstens Richtungskomponenten auf die, einander entgegengerichtet sind, so dass die Strömungen insgesamt wenigstens schräg zueinander verlaufen. Beispielsweise wird dies durch eine Umlenkung der Strömungsrichtung der aufzuheizenden Luft nach dem wenigstens einen Kanal und vor dem Heizelement von mehr als 90°, insbesondere wenigstens im Wesentlichen um 180° erreicht. Dies ist zudem konstruktiv einfach zu bewerkstelligen. In der zuvor beschriebenen Weise kann die aufzuheizende Luft vorgewärmt werden. Dadurch kann die vom Heizelement abzugebende Heizleistung reduziert werden. Außerdem kann die aufzuheizende Luft zweckmäßig in das von der Düseneinheit angewandten Ende der Heizeinheit eingeleitet werden.

Zur Regelung des Durchflusses an aufzuheizender Luft zu dem Heizelement kann, bedarfsweise jeweils, eine Regeleinheit in die Heizeinrichtungen integriert werden. Die Regeleinheit kann der einfachen und genauen Einstellbarkeit halber einen Ringspalt aufweisen, der einen in seinen Abmessungen variablen freien Strömungsquerschnitt für die aufzuheizende Luft aufweist. Beispielsweise kann der Ringspalt durch einen konischen Stempel und eine konische Aufnahme gebildet werden, die korrespondierend zueinander ausgebildet sind. Der Stempel kann dann in einem Gewinde geführt sein, so dass sich der Stempel durch Drehen im Gewinde unter Verringerung des freien Strömungsquerschnitts für die aufzuheizende Luft in die Aufnahme hineinbewegt oder sich unter Vergrößerung des freien Strömungsquerschnitts aus der Aufnahme herausbewegt. Die zur Regelung des Durchflusses beobachtete Kenngröße kann beispielsweise der an den Öffnungen austretende Überdruck sein, der beispielsweise im Bereich zwischen 0,1 bar und 0,8 bar gegenüber dem Atmosphärendruck erhöht sein kann. Zwar ist es zur Erreichung besonders gleichmäßiger Ergebnisse und zur Früherkennung bei drohendem oder auftretendem Produktionsauschuss vorteilhaft den Durchfluss ständig zu überwachen und ggf. den freien Strömungsquerschnitt nachzuregeln. In der Praxis kann es jedoch auch ausreichend sein, den Strömungsquerschnitt händisch einzustellen. Vorliegend wird eine Steuereinheit zur Regelung des Durchflusses als Teil der Regeleinheit verstanden.

Um den Packungsmantel effektiv und präzise aufheizen zu können, kann die Düseneinheit einen, insbesondere quadratisch oder rechteckig, umlaufenden Spalt zur Aufnahme eines Endes eines Packungsmantels aufweisen. Bevorzugt sind die Düseneinheiten oder die Heizeinrichtungen als solches derart beweglich an der Luftzuführeinrichtung gehalten, dass die Düseneinheiten auf die Enden der Packungsmäntel geschoben werden können. Zum Aufheizen der Enden der Packungsmäntel kann der Spalt durch innere und äußere Wandungen begrenzt sein, von denen wenigstens eine, insbesondere wenigstens die innere, Wandung Öffnungen für das Austreten der Heißluft aufweist. Die Heißluft wird dann an der jeweils gewünschten Stelle auf den Packstoff geblasen. Durch die Anordnung der Öffnungen, die Anzahl der Öffnungen und die Größe der Öffnungen kann die Menge an Heißluft eingestellt werden, die auf einen bestimmten Abschnitt des Packungsmantels trifft, Dadurch wird gleichzeitig beeinflusst, wie schnell und/oder wie stark sich der entsprechende Abschnitt des Packstoffs erwärmt.

Für das flüssigkeitsdichte Siegeln des Endbereichs des Packungsmantels zu einem Boden oder einem Kopf der Verpackung bietet es sich an, wenn die Eckbereiche großflächiger Erwärmt werden als die Bereiche dazwischen. Die Eckbereiche überlappen einander nämlich stärker als dies bei den Bereichen dazwischen der Fall ist. Mithin ist es besonders bevorzugt, wenn die gesamte durch die einzelnen Öffnungen gebildete Öffnungsfläche in wenigstens einem Eckbereich größer ist als außerhalb des wenigstens einen Eckbereichs. Dies kann dabei für die innere Wandung des Spalts, die äußere Wandung des Spalts oder beide Wandungen des Spalts gelten.

Alternativ oder zusätzlich kann die durch eine Mehrzahl von Öffnungen gebildete Kontur von Öffnungen in wenigstens einem Eckbereich der inneren Wandung des Spalts und/oder der äußeren Wandung des Spalts wenigstens im Wesentlichen V-förmig ausgebildet sein. Dadurch wird erreicht, dass auch die Kontur des aufgeheizten Eckbereichs des Packungsmantels V-förmig ist. Dies ist günstig für das sich anschließende flüssigkeitsdichte Siegeln des entsprechenden Endes des Packungsmantels. Die V-förmige Kontur kann daher vorzugsweise in allen Eckbereichen der inneren und/oder der äußeren Wandung vorgesehen sein.

Da insbesondere die inneren Flächen des Packungsmantels miteinander verschweißt werden, ist es jedoch grundsätzlich bevorzugt insbesondere die Innenseiten des entsprechenden Endes des Packungsmantels mit Heißluft aufzuheizen. Folglich ist es grundsätzlich zweckmäßig, wenn die Öffnungen der inneren Wandung des Spalts einen insgesamt größeren freien Strömungsquerschnitt bilden als die Öffnungen der äußeren Wandung des Spalts

Alternativ oder zusätzlich kann die Breite des Spalts, vorzugsweise im Wesentlichen einheitlich, weniger als 3 mm, insbesondere weniger als 2 mm, betragen. Dann ergibt sich bei mittig eingestecktem Packungsmantel eine geeignete Distanz von innerer Wandung und äußerer Wandung zum effektiven und präzisen Anlasen des Packstoffs mit Heißluft aus den entsprechenden Heizeinrichtungen.

Nachfolgend wird die Erfindung anhand einer lediglich ein Ausführungsbeispiel darstellenden Zeichnung näher erläutert. In der Zeichnung zeigt
- Fig. 1: eine Vorrichtung zum Befüllen von Packungen in schematischer Darstellung,
- Fig. 2: ein in der Vorrichtung gemäß Fig. 1 gefertigter Packungsmantel in einer perspektivischen Ansicht,
- Fig. 3: eine Heizeinheit der Vorrichtung gemäß Fig. 1 in einer perspektivischen Ansicht,
- Fig. 4: eine Heizeinrichtung der Heizeinheit gemäß Fig. 3 in einer Schnittansicht,
- Fig. 5: die Heizeinrichtung aus Fig. 4 in einer weiteren Schnittansicht,
- Fig. 6: die Düseneinheit der Heizeinrichtung gemäß Fig. 4 in einer perspektivischen Ansicht und
- Fig. 7: die Heizeinrichtung aus Fig. 4 in einer Querschnittsansicht.

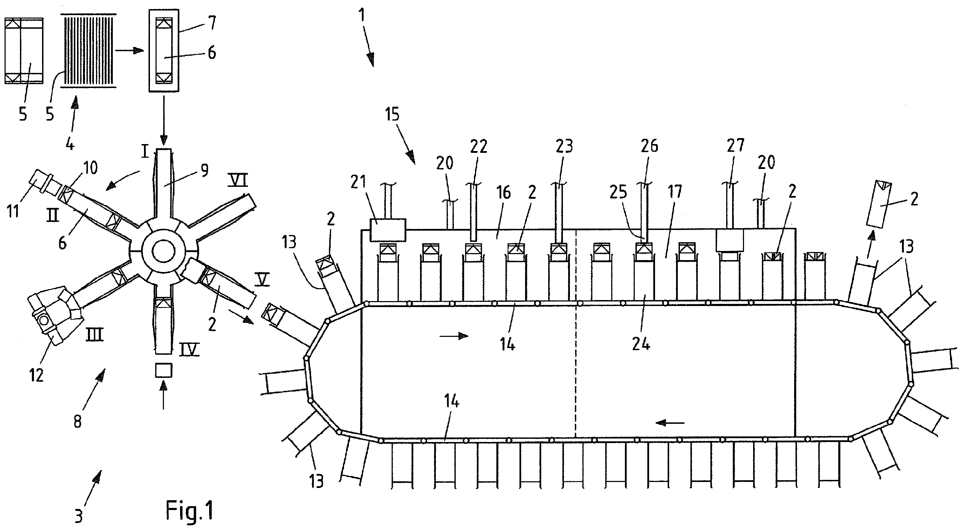

In der Fig. 1 ist eine Vorrichtung 1 zum Befüllen von Packungen 2, insbesondere mit fließfähigen Lebensmitteln, also eine sogenannte Füllmaschine, umfassend eine Vorrichtung 3 zum Formen von Packungen 2 dargestellt. Die dargestellte und insoweit bevorzugte Vorrichtung 1 weist eine Reihe von parallelen Bearbeitungslinien auf, von denen in der Fig. 1 lediglich eine Bearbeitungslinie dargestellt ist. Jeder Bearbeitungslinie ist ein Bündel 4 von Packungsrohlingen 5 in Form von Packstoffzuschnitten zugeordnet, deren Längsränder aneinander gesiegelt sind und so Packungsmäntel 6 bilden, die zusammengefaltet vorgehalten werden. Durch eine Zuführeinrichtung 7 werden die Packungsmäntel 6 aufgefaltet, wobei bedarfsweise noch eine Applikationseinrichtung, zum Applizieren von nicht dargestellten Ausgießelementen an die Packungsmäntel 6 vorgesehen sein kann.

Die Vorrichtung 3 zum Formen der Packung 2 weist ein Dornrad 8 auf, das im dargestellten und insoweit bevorzugten Fall sechs Dorne 9 umfasst und sich zyklisch, also schrittweise, gegen den Uhrzeigersinn dreht. In der ersten Dornradstellung I wird ein Packungsrohling 5 in Form eines Packungsmantels 6 auf den Dorn 9 geschoben. Anschließend wird das Dornrad 8 in der nächsten Dornradstellung II weitergedreht, in der der gegenüber dem Dorn 9 vorstehende Endbereich 10 des Packungsmantels 6 über eine Heizeinheit 11 mit Heißluft erwärmt wird. In der nächsten Dornradstellung III wird der erwärmte Endbereich 10 des Packungsmantels 6 durch eine Presse 12 vorgefaltet und in der nachfolgenden Dornradstellung IV in der gefalteten Position durch eine nicht näher bezeichnete Siegeleinrichtung dicht verschlossen, insbesondere zu einem Boden, gesiegelt. Es wird auf diese Weise eine einseitig verschlossene Packung erhalten, die in der nachfolgenden Dornradstellung V vom Dorn 9 entnommen und an eine Zelle 13 einer im Kreis geführten endlosen Transporteinrichtung 14 übergeben wird. In der nächsten Dornradstellung VI ist dem Dorn 9 kein Arbeitsschritt zugeordnet. Die Anzahl von Dornradstellungen bzw. Dornen und die dort vorgesehenen Bearbeitungsschritte können bedarfsweise von der Darstellung gemäß Fig. 1 und der zugehörigen Beschreibung abweichen.

Die Packung 2, die sich im Stadium eines Packungsbechers befindet, wird mit dem offenen Ende nach oben weisend in der zugehörigen Zelle 13 durch eine Füllmaschine transportiert. Bedarfsweise könnte auch die Packung 2 durch den nach oben weisenden Bodenbereich gefüllt werden, wenn der nach unten weisende Kopfbereich dafür geschlossen ist. Die Packung 2 gelangt in eine Aseptikkammer 15, die eine Sterilisationszone 16 und eine Füll- und Siegelzone 17 umfasst, durch die die Packungen in der durch die Pfeile symbolisierten Transportrichtung von links nach rechts transportiert werden. Der Transport der Packungen 2 muss nicht geradlinig erfolgen, sondern kann auch in wenigstens einem Bogen oder gar im Kreis erfolgen.

Der Aseptikkammer 15 wird Sterilluft über entsprechende Sterilluftanschlüsse 20 zugeführt. Die Packungen 2 werden durch eine Vorwärmeinrichtung 21 nacheinander durch Anblasen mit heißer Sterilluft vorgewärmt. Anschließend werden die Packungen 2 mittels einer Sterilisiereinrichtung 22, vorzugsweise mittels Wasserstoffperoxid, sterilisiert, woraufhin die Packungen 2 durch Beaufschlagen mit Sterilluft über eine Trocknungseinrichtung 23 getrocknet und nach dem Übergang von der Sterilisationszone 16 in die Füll- und Siegelzone 17 in eine Füllposition 24 unterhalb eines Füllauslaufs 25 gebracht werden. Dort werden die Packungen 2 nacheinander mit Lebensmitteln 26 gefüllt. Die gefüllten Packungen 2 werden sodann mit einer Verschließeinrichtung 27 durch Falten des oberen Bereichs der Packung 2 und Siegeln verschlossen. Die verschlossenen Packungen 2 werden anschließend aus den Zellen 13 der Transporteinrichtung 14 entnommen. Die nun leeren Zellen 13 werden mit der Transporteinrichtung 14 weiter in Richtung des Dornrads 8 bewegt, um dort weitere Packungen 2 aufzunehmen.

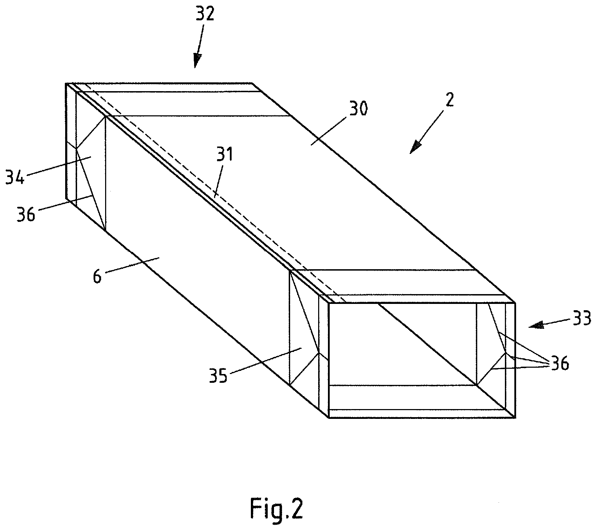

In der Fig. 2 ist ein Packungsmantel 6 dargestellt, wie er beispielsweise in der zuvor beschriebenen Vorrichtung 1 erhitzt und sodann einseitig geschlossen wird. Bei den Packungen 2 handelt es sich insbesondere um Kartonverbundverpackungen aus einem entsprechenden Packstoff 30 in Form eines Laminats bzw. Packstofflaminats, mit wenigstens einer Kartonschicht, wenigstens einer Barriereschicht, etwa bestehend aus Aluminium, Polyamid und/oder einem Ethylen-Vinylalkohol, und äußeren Schichten aus einem thermoplastischen Kunststoff, insbesondere Polyethylen (PE). Die Längsränder 31 des aus dem Packstoff 30 gebildeten Packstoffzuschnitts sind bereits miteinander gesiegelt worden. Das bedeutet, dass die Längsränder des Packstoffzuschnitts überlappend aufeinander gelegt und in dieser Position miteinander verschweißt worden sind. An den beiden offenen Enden 32,33 des Packungsmantels 6 sind ein Bodenbildungsbereich 34 zur Bildung des Bodens und ein Giebelbildungsbereich 35 zur Bildung des Giebels der Packung 2 vorgesehen. Dazu werden die entsprechenden Bereiche an den dafür vorgesehenen Faltlinien 36 zusammengefaltet.

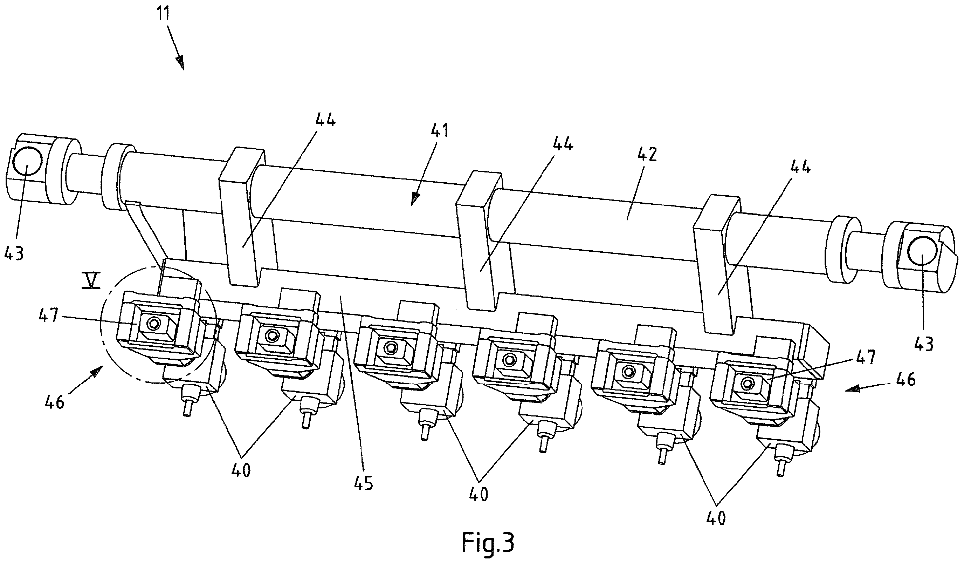

In der Fig. 3 ist eine Heizeinheit 11 der Vorrichtung 1 zum Befüllen von Packungen dargestellt, die sechs nebeneinander angeordnete Heizeinrichtungen 40 zum partiellen Aufheizen von zu siegelnden Endbereichen 10 von Packungsmänteln 6 mit Heißluft aufweist. Die Heizeinheit 11 weist ferner eine Luftzuführeinrichtung 41 mit einem drehbar gelagerten Zuführrohr 42 für aufzuheizende Luft auf. Die aufzuheizende Luft wird dem Zuführrohr 42 über seitliche Öffnungen 43 zugeführt. Über hohle Verbindungskanäle 44 ist das Zuführrohr 42 mit einer Sammelleitung 45 verbunden aus der die aufzuheizende Luft auf die einzelnen Heizeinrichtungen 40 verteilt wird. Die dargestellten und insoweit bevorzugten Heizeinrichtungen 40 weisen an ihrem vorderen Ende jeweils eine Düseneinheit 46 mit einem rechteckigen, umlaufenden Spalt 47 auf, in den jeweils ein Ende eines Packungsmantels 6 eingeführt werden kann, um mittels in der Heizeinrichtung 40 aufgeheizter Heißluft partiell aufgeheizt zu werden.

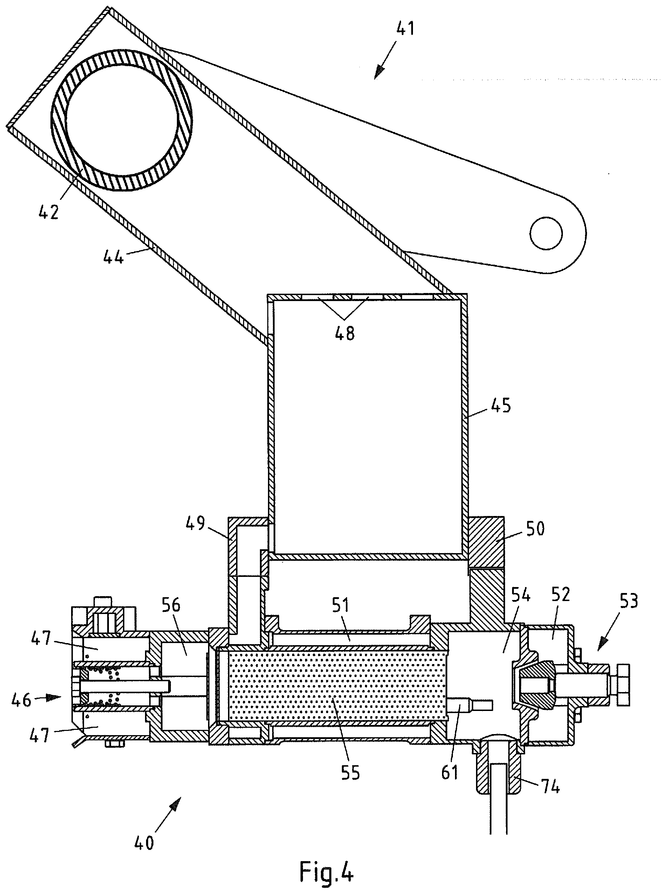

In der Fig. 4 ist die Heizeinheit 11 in einer Schnittansicht quer zur Sammelleitung 45 und zum Zuführrohr 42 sowie durch eine Heizeinrichtung 40 dargestellt. Die Luft gelangt dabei vom Zuführrohr 42 über die Verbindungskanäle 44 über entsprechende Öffnungen 48 in einen Sammelkanal 45 für die aufzuheizende Luft. Mit dem Sammelkanal 45 sind die Heizeinrichtungen 40 jeweils über zwei Halterungen 49,50 verbunden, die die Heizeinrichtungen 40 am Sammelkanal 45 halten und gegenüber dem Sammelkanal 45 fixieren. Bei den dargestellten und insoweit bevorzugten Heizeinrichtungen 40 sind die Halterungen 49,50 einer Heizeinrichtung 40 an entgegengesetzten Längsseiten des Sammelkanals 45 mit diesem verbunden. Dabei bildet eine Halterung die Zuführung von aufzuheizender Luft in die Heizeinrichtung.

Die dargestellte und insoweit bevorzugte Heizeinrichtung 40 weist einen Ringkanal 51 für die aufzuheizende Luft auf, in dem die Luft in den hinteren Teil der Heizeinrichtung 40 transportiert wird. Dort gelangt die aufzuheizende Luft in eine Dosierkammer 52, von wo die aufzuheizende Luft über eine Regeleinheit 53 zur Regelung des Durchflusses an aufzuheizender Luft in eine Heizkammer 54 gelangt, in der ein elektrisch beheiztes und von der aufzuheizenden Luft durchströmtes Heizelement 55 vorgesehen ist. Nach dem Verlassen des Heizelements 55 tritt die Heißluft in eine Heißluftkammer 56 ein, über die die Heißluft in die Düseneinheit 46 gelangt. Die Düseneinheit 46 kann im umlaufenden rechteckigen Spalt 47 ein zu siegelnden Endbereich 10 eines Packstoffmantels 6 aufnehmen, der dann im Spalt 47 der Düseneinheit 46 gezielt und vorzugsweise partiell von der Heißluft angeblasen wird. Der umlaufende Spalt 47 muss nicht rechteckig ausgebildet sein. Der Spalt 47 kann auch rund, oval, oder anderweitig vieleckig, also dreieckig oder mehr als viereckig, ausgestaltet sein. Dabei bietet es sich insbesondere an, wenn der wenigstens eine Endbereich 10 der wenigstens zwei Packungsmäntel 6 eine Form oder Kontur aufweist, die mit der Form des Spalts 47 korrespondiert.

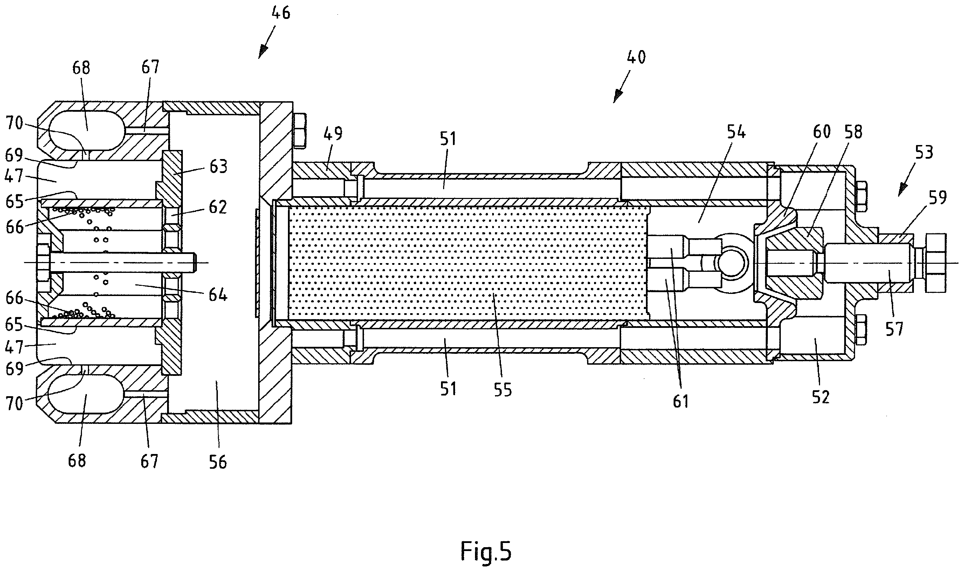

In der Fig. 5 ist die Heizeinrichtung 40 im Detail und einem Längsschnitt entlang einer Ebene dargestellt, die senkrecht zu der Schnittebene gemäß Fig. 4 ausgerichtet ist. Zentral angeordnet befindet sich das Heizelement 55, das von aufzuheizender Luft von rechts nach links durchströmt wird, während die aufzuheizende Luft aufgeheizt wird. Die aufzuheizende Luft gelangt dazu über eine am vorderen, also am linken, Ende des Heizelements 55 vorgesehene Halterung 49 in den Ringkanal 51, der sich in Längsrichtung des Heizelements 55 und umlaufend zum Heizelement 55 erstreckt. Über den Ringkanal 51 gelangt die aufzuheizende Luft in den hinteren, rechts dargestellten Teil der Heizeinrichtung 40. Dort ist die Dosierkammer 52 vorgesehen, aus der die aufzuheizende Luft dosiert in Richtung des Heizelements 55 abströmt. Zur Dosierung des Luftstroms ist eine Regeleinheit 53 vorgesehen, die einen Stempel 57 mit einem konischen Ende 58 aufweist. Der Stempel 57 ist drehbar in einem Gewinde 59 gehalten, so dass der Stempel 57 durch Drehung desselben vor und zurück verschoben werden kann. Dabei verringert sich die Distanz des konischen Endes 58 des Stempels 57 relativ zur korrespondierend konisch ausgebildeten Aufnahme 60 oder die Distanz vergrößert sich, je nach der Drehrichtung des Stempels 57. Zwischen dem konischen Ende 58 des Stempels 57 und der konischen Aufnahme 60 bildet sich so ein Ringspalt mit variierendem freien Strömungsquerschnitt aus, so dass die durch den Ringspalt in die Heizkammer 54 strömende Luft dosiert werden kann. Dabei ist die Dosierung der den Ringspalt durchströmenden Luft besonders exakt durchführbar, wenn die konischen Flächen in einem flachen Winkel ausgebildet sind, so dass für eine relativ geringe Strömungsquerschnittsänderung ein relativ langer Stellweg des Stempels 57 notwendig ist.

In der Heizkammer 54 ist das Heizelement 55 in Form einer Heizkartusche vorgesehen, die über einen elektrischen Anschluss 61 an eine elektrische Spannungsversorgung angeschlossen werden kann. Das Heizelement 55 wirkt als Heizwiderstand und heizt die durchströmende Luft auf, so dass die Luft als Heißluft aus dem Heizelement 55 in die Heißluftklammer 56 ausströmt, anschließend strömt die Heißluft beispielsweise durch Öffnungen 62 eines Lochblechs 63 zur Ausbildung einer laminaren Strömung in einen zentralen Bereich 64 der Düseneinheit 46. Der zentrale Bereich 64 der Düseneinheit 46 bildet die innere umlaufende Wandung 65 des Spalts 47 zur Aufnahme eines offenen Endes 110 eines Packungsmantels 6. In der inneren Wandung 65 ist eine Reihe von Öffnungen 66 vorgesehen, die bei der dargestellten und insoweit bevorzugten Heizeinrichtung 40 etwa dieselbe Größe haben. Durch die Öffnungen 66 strömt die Heißluft in den Spalt 47 und bedarfsweise gegen ein Ende eines entsprechend positionierten Packungsmantels 6. Die Heißluft kann aus der Heißluftkammer 56 auch über weitere Kanäle 67 einem äußeren Bereich 68 der Düseneinheit 46 zugeführt werden. Der äußere Bereich 68 der Düseneinheit 46 bildet dabei die umlaufende und den Spalt 47 zur teilweisen Aufnahme des Packungsmantels 6 begrenzende äußere Wandung 69. Aus der äußeren Wandung 69 strömt die Heißluft ebenfalls durch einzelne Öffnungen 70 in den Spalt 47 ein.

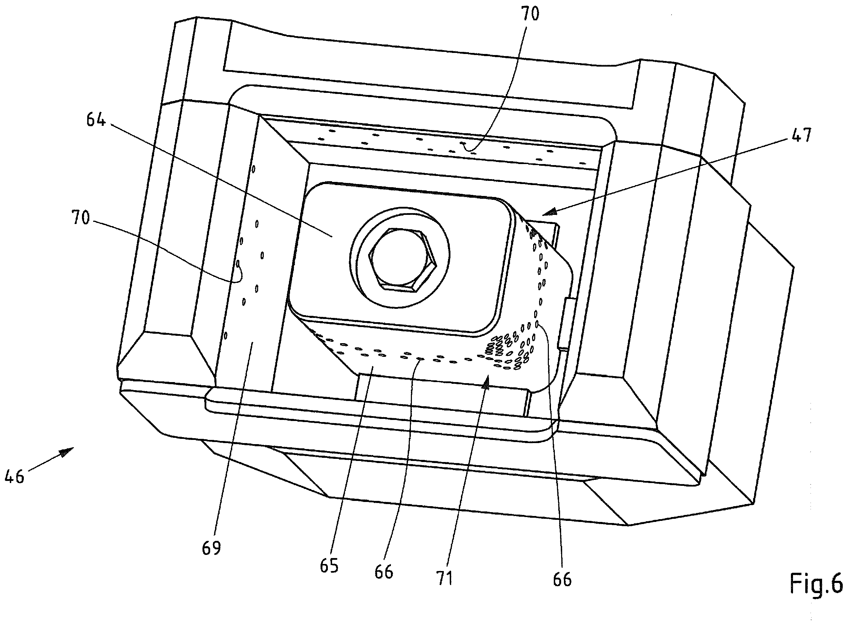

Die Düseneinheit 46 ist als Detail in der Fig. 6 dargestellt. Man erkennt den umlaufenden Spalt 47 zur Aufnahme eines Endes eines Packungsmantels 6 und die Öffnungen 66 in der inneren Wandung 65 und der äußeren Wandung 69 des Spalts 47. In der äußeren Wandung 69 sind dabei weniger Öffnungen 70 vorgesehen, die insgesamt auch eine geringere Öffnungsfläche bilden als die Öffnungen 66 in der inneren Wandung 65. Diese sind zahlenmäßig mehr und bilden zusammen auch eine größere Öffnungsfläche. Die Öffnungen 66 der inneren Wandung 65 sind zudem überwiegend in den Eckbereichen des Spalts 47 angeordnet. In diesen Eckbereichen bilden die Öffnungen 66 zu dem eine V-förmige Kontur 71.

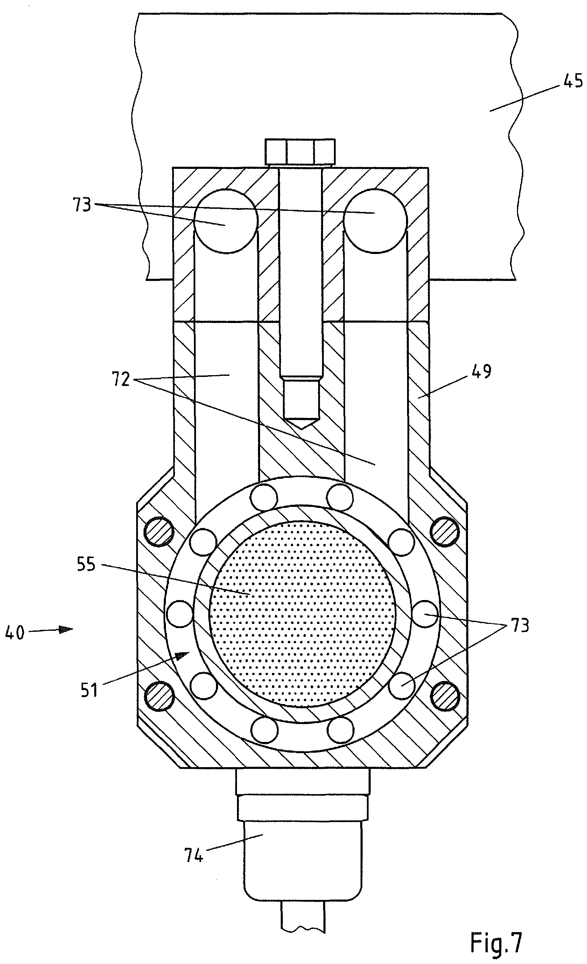

In der Fig. 7 ist eine Heizeinrichtung 40 in einem Querschnitt auf der Höhe der vorderen Halterung 49 dargestellt. Man erkennt, dass die Halterung 49 zwei im Wesentlichen parallele Kanäle 72 aufweist, die über Öffnungen 73 mit der Sammelleitung 45 der Luftzuführungseinrichtung 41 verbunden sind. Aus der Sammelleitung 45 strömt demnach aufzuheizende Luft über die beiden Kanäle 72 der Halterung 49 und über eine Reihe von umfangseitig zu dem Ringspalt 51 verteilt angeordneten Öffnungen 73 in den insbesondere in der Fig. 5 dargestellten Ringspalt 51. Von dem Ringspalt 51 umfasst ist das poröse Heizelement 55 dargestellt. Am hinteren Teil der Heizeinrichtung 40 ist ein Anschluss 74 für den elektrischen Anschluss des Heizelements 55 an die Spannungsversorgung vorgesehen.

Da die Halterung 49, die an dem heißen Ende der Heizeinrichtung 40 angrenzend an die Düseneinheit 46 vorgesehen ist, Kanäle 72 zum Durchströmen mit aufzuheizender Luft aufweist, wird die Halterung 49 von innen gekühlt. Die Wärme wird also teilweise über die aufzuheizende Luft wieder in die Heizeinrichtung 40 zurückgeführt. Zudem ist der Sammelkanal 45 durch die aufzuheizende Luft von innen gekühlt, was weiter dafür sorgt, dass die Bereiche der Heizeinheit 11 mit sehr hoher Temperatur lokal recht begrenzt sind und sich die benachbarten Heizeinrichtungen 40 thermisch nicht oder nur geringfügig beeinflussen. Daher ist auch nur lokal begrenzt mit einer erheblichen Wärmeausdehnung zu rechnen, die dort tolerierbar ist und die Funktion der Heizeinrichtungen 40 nicht oder nicht nennenswert beeinträchtigt. Eine darüber hinausgehende Wärmeausdehnung, die insbesondere die Distanz der Heizeinrichtungen 40 untereinander verändert kann weitestgehend vermieden werden. Somit kann das partielle Aufheizen der Packungsmäntel 6 sehr präzise und effizient erfolgen.

## Patentansprüche

1. Vorrichtung (1) zum Befüllen von Packungen (2), insbesondere mit Lebensmitteln, in einer Mehrzahl von parallelen Bearbeitungslinien, wobei jede Bearbeitungslinie ein Dornrad (8) zum Formen der Packungen (2) aufweist, mit einer Heizeinheit (11) zum wenigstens partiellen Aufheizen von zu siegelnden Endbereichen (10) von auf unterschiedlichen Dornrädern (8) angeordneten Packungsmänteln (6) mit Heißluft, mit einer Siegeleinheit zum flüssigkeitsdichten Schließen und Verschweißen der Endbereiche (10) der aufgeheizten und auf unterschiedlichen Dornrädern (8) angeordneten Packungsmäntel (6) und mit einer Fülleinrichtung (26) zum Befüllen der wenigstens einseitig geschlossener Packungsmäntel (6), wobei die Heizeinheit (11) eine Mehrzahl von Heizeinrichtungen (40) zum wenigstens partiellen Aufheizen von zu siegelnden Endbereichen (10) von auf unterschiedlichen Dornrädern (8) angeordneten Packungsmänteln (6) mit Heißluft aufweist, wobei die Heizeinheit (11) eine Luftzuführeinrichtung (41) zum Zuführen von aufzuheizender Luft zu den Heizeinrichtungen (40) aufweist, wobei die Heizeinrichtungen (40) jeweils ein elektrisches Heizelement (55) zum Erzeugen von Heißluft und eine Düseneinheit (46) zum Anblasen des Endbereichs (10) des Packungsmantels (6) mit der in der Heizeinrichtung (40) erzeugten Heißluft aufweisen, wobei die Heizeinrichtungen (40) jeweils separat über wenigstens eine Halterung (49) mit der Luftzuführeinrichtung (41) verbunden und jeweils separat über die wenigstens eine Halterung (49) an der Luftzuführeinrichtung (41) gehalten ist und dass die wenigstens einen Halterungen (49) jeweils wenigstens zwei separate und mit einer aufzuheizende Luft bereitstellenden Sammelleitung (45) der Luftzufuhreinrichtung (41) verbundene Kanäle (72) zum Zuführen von aufzuheizender Luft in die Heizeinrichtung (40) aufweisen.

2. Vorrichtung nach Anspruch 1,
**dadurch gekennzeichnet, dass**
die wenigstens einen Halterungen (49) an einer Sammelleitung (45) mit der Luftzuführeinrichtung (41) verbunden sind und dass die Heizeinrichtungen (40) jeweils separat über die wenigstens einen Halterungen (49) an der Sammelleitung (45) der Luftzuführeinrichtung (41) gehalten sind.

3. Vorrichtung nach Anspruch 1 oder 2,
**dadurch gekennzeichnet, dass**
die Heizelemente (55) der wenigstens zwei Heizeinrichtungen (40) jeweils über die wenigstens eine Halterung (49) in fluider Verbindung zur Luftzuführeinrichtung (41) steht und, vorzugsweise, dass die wenigstens zwei Heizeinrichtungen (40) dazu ausgebildet sind, insbesondere ausschließlich, über die Halterung (49) mit aufzuheizender Luft versorgt zu werden.

4. Vorrichtung nach einem der Ansprüche 1 bis 3,
**dadurch gekennzeichnet, dass**
die wenigstens eine Halterung (49) an einem der Düseneinheit (46) und/oder dem Heizelement (55) zugeordneten Bereich der Heizeinrichtung(40), insbesondere an dem der Düseneinheit (46) zugeordneten Ende des Heizelements (55) oder an einem Bereich der Heizeinrichtung (40) zwischen der Düseneinheit (46) und dem Heizelement (55), vorgesehen ist.

5. Vorrichtung nach einem der Ansprüche 1 bis 4,
**dadurch gekennzeichnet, dass**
die Heizeinrichtungen (40) jeweils separat über wenigstens zwei Halterungen (49,50) mit der Luftzuführeinrichtung (41) verbunden und jeweils separat über die wenigstens zwei Halterungen (49,50) an der Luftzuführeinrichtung (41) gehalten sind.

6. Vorrichtung nach einem der Ansprüche 1 bis 4,
**dadurch gekennzeichnet, dass**
die Heizeinrichtungen (40) jeweils wenigstens einen Kanal, insbesondere Ringkanal (51), zur Leitung der aufzuheizenden Luft außerhalb des Heizelements (55) aufweist und dass das Heizelement (55) dazu ausgebildet ist, dass die sich aufheizende Luft wenigstens teilweise in entgegengesetzte Richtung zu der aufzuheizenden Luft in dem Kanal außerhalb des Heizelements (55) in Richtung des Düsenelements (46) geführt wird.

7. Vorrichtung nach Anspruch 6,
**dadurch gekennzeichnet, dass**
der Kanal der Heizeinrichtungen (40) wenigstens teilweise, insbesondere wenigstens im Wesentlichen umlaufend zu dem Heizelement (55) vorgesehen ist.

8. Vorrichtung nach Anspruch 6 oder 7,
**dadurch gekennzeichnet, dass**
der Kanal der Heizeinrichtungen (40) und das Heizelement (55) der Heizeinrichtungen (40) dazu ausgebildet sind, dass die Luft in dem Kanal und in dem Heizelement (55) im Wesentlichen in einander entgegengesetzte Richtungen strömt.

9. Vorrichtung nach einem der Ansprüche 1 bis 8,
**dadurch gekennzeichnet, dass**
eine Regeleinheit (53) zur Regelung des Durchflusses an aufzuheizender Luft zu dem Heizelement (55) vorgesehen ist und, vorzugsweise, dass die Regeleinheit (53) einen Ringspalt mit einem veränderlichem freien Strömungsquerschnitt aufweist.

10. Vorrichtung nach einem der Ansprüche 1 bis 9,
**dadurch gekennzeichnet, dass**
die Düseneinheit (46) einen, insbesondere quadratisch oder rechteckig, umlaufenden Spalt (47) zur Aufnahme eines Endes eines Packungsmantels (6) aufweist und dass der Spalt (47) durch eine innere Wandung (65) mit Öffnungen (66) für das Austreten von Heißluft und/oder durch eine äußerer Wandung (69) mit Öffnungen (70) für das Austreten von Heißluft begrenzt wird.

11. Vorrichtung nach Anspruch 10,
**dadurch gekennzeichnet, dass**
die gesamte durch die einzelnen Öffnungen(66,70) gebildete Öffnungsfläche der inneren und/oder der äußeren Wandung (65,69) in wenigstens einem Eckbereich, insbesondere allen Eckbereichen, des Spalts (47) größer ist als außerhalb der Eckbereiche.

12. Vorrichtung nach Anspruch 10 oder 11,
**dadurch gekennzeichnet, dass**
die Kontur (71) der Öffnungen (66) der inneren und/oder der äußeren Wandung (65) in wenigstens einem Eckbereich, insbesondere allen Eckbereichen, des Spalts (47) im Wesentlichen V-förmig ist.

13. Vorrichtung nach einem der Ansprüche 1 bis 12,
**dadurch gekennzeichnet, dass**
die Breite des Spalts (47) weniger als 3 mm, insbesondere weniger als 2 mm, beträgt.

14. Verfahren zum Formen von Packungen (2), insbesondere Kartonverbundverpackungen,
- bei dem jeweils ein Endbereich (10) von mehreren auf unterschiedlichen Dornrädern (8) angeordneten Packungsmänteln (6) parallel und wenigstens partiell aufgeheizt werden,
- bei dem die Endbereiche (10) der auf unterschiedlichen Dornrädern (8) angeordneten Packungsmäntel (6) zum parallelen wenigstens partiellen Aufheizen jeweils wenigstens teilweise in einen Spalt (47) einer Heizeinrichtung (40) einer Vorrichtung (1) nach einem der Ansprüche 1 bis 13, eingeführt und in dem Spalt (47) mit Heißluft angeblasen werden,
- bei dem der wenigstens partiell aufgeheizten Endbereichen (10) der wenigstens zwei Packungsmäntel (6), vorzugsweise parallel, durch Siegeln verschlossen werden,
- bei dem den wenigstens zwei Heizeinrichtungen (40) aufzuheizende Luft über eine Luftzuführeinrichtung (41) zugeführt wird und
- bei dem die wenigstens zwei Heizeinrichtungen (40) jeweils separat über wenigstens eine Halterung (49) an der Luftzuführeinrichtung (41) gehalten werden.

## Claims

1. Device (1) for filling packages (2), in particular with foodstuffs, in a plurality of parallel processing lines, wherein each processing line has a mandrel wheel (8) for forming the packages (2), with a heating unit (11) for at least partially heating end regions (10) to be sealed of packaging sleeves (6) arranged on different mandrel wheels (8) with hot air, with a sealing unit for liquid-tight closing and sealing of the end regions (10) of the heated packaging sleeves (6) arranged on different mandrel wheels (8) and with a filling device (26) for filling the packaging sleeves (6) closed at least on one side, wherein the heating unit (11) has a plurality of heating apparatuses (40) for at least partially heating ends regions (10) to be sealed of packaging sleeves (6) arranged on different mandrel wheels (8) with hot air, wherein the heating unit (11) has an air supply apparatus (41) for supplying air to be heated to the heating apparatuses (40), wherein the heating apparatuses (40) each have an electric heating element (55) for generating hot air and a nozzle unit (46) for blowing the end region (10) of the packaging sleeve (6) with the hot ait generated in the heating apparatus (40), wherein the heating apparatuses (40) are each separately connected via at least one holder (49) to the air supply apparatus (41) and are each separately held via the at least one holder (49) on the air supply apparatus (41) and in that the at least one holders (49) each have at least two separate channels (72) connected to a collection line (45) of the air supply apparatus (41) providing air to be heated in order to supply air to be heated into the heating apparatus (40).

2. Device according to claim 1, **characterised in that** the at least one holders (49) are connected to a connection line (45) with the air supply apparatus (41) and **in that** the heating apparatuses (40) are each separately held via the at least one holders (49) on the collection line (45) of the air supply apparatus (41).

3. Device according to claim 1 or 2, **characterised in that** the heating elements (55) of the at least two heating apparatuses (40) are each fluidically connected to the air supply apparatus (41) via the at least one holder (49) and preferably **in that** the at least two heating apparatuses (40) are designed to be supplied in particular exclusively via the holder (49) with air to be heated.

4. Device according to any one of claims 1 to 3, **characterised in that** the at least one holder (49) is provided on a region of the heating apparatus (40) assigned to the nozzle unit (46) and/or the heating element (55), in particular to the end of the heating element (55) assigned to the nozzle unit (46) or to a region of the heating apparatus (40) between the nozzle unit (46) and the heating element (55).

5. Device according to any one of claims 1 to 4, **characterised in that** the heating apparatuses (40) are each separately connected via at least two holders (49, 50) to the air supply apparatus (41) and are each separately held via the at least two holders (49, 50) on the air supply apparatus (41).

6. Device according to any one of claims 1 to 4, **characterised in that** the heating apparatuses (40) each have at least one channel, in particular an annular channel (51) for channelling the air to be heated outside of the heating element (55) and **in that** the heating element (55) is designed such that the air that is heating up is guided at least partially in the opposing direction to the air to be heated in the channel outside of the heating element (55) in the direction of the nozzle element (46).

7. Device according to claim 6, **characterised in that** the channel of the heating apparatuses (40) is provided at least partially, in particular at least substantially circumferentially to the heating element (55).

8. Device according to claim 6 or 7, **characterised in that** the channel of the heating apparatuses (40) and the heating element (55) of the heating apparatuses (40) are designed such that the air in the channel and in the heating element (55) flows substantially in directions opposed to one another.

9. Device according to any one of claims 1 to 8, **characterised in that** a regulating unit (53) is provided to regulate the flow rate of air to be heated to the heating element (55) and preferably **in that** the regulating unit (53) has an annular gap with a varying free flow cross-section.

10. Device according to any one of claims 1 to 9, **characterised in that** the nozzle unit (46) has an, in particular square or rectangular, circumferential gap (47) to receive an end of a packaging sleeve (6) and **in that** the gap (47) is delimited by an inner wall (65) with openings (66) for hot air to escape and/or by an outer wall (69) with openings (70) for hot air to escape.

11. Device according to claim 10, **characterised in that** the entire opening surface, formed by the individual openings (66, 70), of the inner and/or the outer wall (65, 69) is larger in at least one corner region, in particular all corner regions, of the gap (47) than outside of the corner regions.

12. Device according to claim 10 or 11, **characterised in that** the contour (71) of the openings (66) of the inner and/or the outer wall (65) is substantially V-shaped in at least one corner region, in particular all corner regions, of the gap (47).

13. Device according to any one of claims 1 to 12, **characterised in that** the width of the gap (47) is less than 3 mm, in particular less than 2 mm.

14. Method for forming packages (2), in particular carton composite packaging,
- in which in each case one end region (10) of a plurality of packaging sleeves (6) arranged on different mandrel wheels (8) are heated in parallel and at least partially,
- in which the end regions (10) of the packaging sleeves (6) arranged on different mandrel wheels (8) are introduced for parallel, at least partially heating in each case at least partially into a gap (47) of a heating apparatus (40) of a device (1) according to any one of claims 1 to 13 and blown in the gap (47) with hot air,
- in which the at least partially heated end regions (10) of the at least two packaging sleeves (6) are closed preferably in parallel, by sealing,
- in which air to be heated is supplied via an air supply apparatus (41) to the at least two heating apparatuses (40) and
- in which the at least two heating apparatuses (40) are each separately held via at least one holder (49) on the air supply apparatus (41).

## Revendications

1. Dispositif (1) de remplissage d'emballages (2), notamment avec des denrées alimentaires, dans une multitude de lignes d'usinage parallèles, chaque ligne d'usinage présentant une roue à mandrin (8) pour la mise en forme d'emballages (2), avec une unité chauffante (11) pour au moins le réchauffement partiel, avec de l'air chaud, de parties d'extrémité (10) à sceller d'enveloppes d'emballage (6), agencées sur différentes roues à mandrin (8), avec une unité de scellement pour la fermeture étanche aux fluides et le soudage des parties d'extrémité (10) des enveloppes d'emballage (6) réchauffées et agencées sur différentes roues à mandrin (8) et avec un dispositif de remplissage (26) pour le remplissage des enveloppes d'emballage (6) au moins fermées d'un côté, l'unité chauffante (11) présentant une multitude de dispositifs chauffants (40) pour le réchauffement, au moins partiel, avec de l'air chaud, de parties d'extrémité (10) à sceller d'enveloppes d'emballage (6) agencées sur différentes roues à mandrin (8), l'unité chauffante (11) présentant un dispositif d'alimentation en air (41) pour l'alimentation des dispositifs chauffants (40) en air à réchauffer, les dispositifs chauffants (40) présentant respectivement un élément chauffant (55) électrique pour générer de l'air chaud et une unité à buses (46) pour le soufflage de la partie d'extrémité (10) de l'enveloppe d'emballage (6) avec de l'air chaud généré dans le dispositif chauffant (10),
les dispositifs chauffants (40) étant reliés, chacun séparément, au moyen d'au moins un support (49), au dispositif d'alimentation en air (41), et étant maintenus, chacun séparément, au moyen d'au moins un support (49), sur le dispositif d'alimentation en air (41), et en ce qu'au moins un support (49) présente respectivement au moins deux canaux (72) séparés et reliés à un tuyau collecteur (45) du dispositif d'alimentation en air (41) fournissant l'air à réchauffer pour l'alimentation du dispositif chauffant (40) en air à réchauffer.

2. Dispositif selon la revendication 1,
**caractérisé en ce qu'**au moins un support (49) est relié, au niveau d'un tuyau collecteur (45), au dispositif d'alimentation en air (41) et **en ce que** les dispositifs chauffants (40) sont maintenus, chacun séparément, au moyen d'au moins un support (49), sur le tuyau collecteur (45) du dispositif d'alimentation en air (41).

3. Dispositif selon la revendication 1 ou 2,
**caractérisé en ce que** les éléments chauffants (55) d'au moins deux dispositifs chauffants (40) se trouvent en communication fluidique, respectivement au moyen d'au moins un support (49), avec le dispositif d'alimentation en air (41) et, de préférence, **en ce que** les au moins deux dispositifs chauffants (40) sont conçus pour être alimentés en air à réchauffer, notamment exclusivement au moyen du support (49).

4. Dispositif selon l'une des revendications 1 à 3,
**caractérisé en ce que** l'on prévoit au moins un support (49) au niveau d'une zone du dispositif chauffant (40) associée à l'unité à buses (46) et/ou à l'élément chauffant (55), notamment au niveau de l'extrémité de l'élément chauffant (55) associée à l'unité à buses (46) ou au niveau d'une zone du dispositif chauffant (40) entre l'unité à buses (46) et l'élément chauffant (55).

5. Dispositif selon l'une des revendications 1 à 4,
**caractérisé en ce que** les dispositifs chauffants (40) sont reliés, chacun séparément, au moyen d'au moins deux supports (49, 50), au dispositif d'alimentation en air (41) et sont maintenus, chacun séparément, au moyen d'au moins deux supports (49, 50), sur le dispositif d'alimentation en air (41).

6. Dispositif selon l'une des revendications 1 à 4,
**caractérisé en ce que** les dispositifs chauffants (40) présentent respectivement au moins un canal, notamment un canal annulaire (51), pour le guidage de l'air à réchauffer à l'extérieur de l'élément chauffant (55) et **en ce que** l'élément chauffant (55) est conçu pour que l'air se réchauffant soit guidé, au moins partiellement, dans la direction opposée à l'air à réchauffer dans le canal à l'extérieur de l'élément chauffant (55) dans la direction de l'élément à buses (46).

7. Dispositif selon la revendication 6,
**caractérisé en ce que** l'on prévoit le canal des dispositifs chauffants (40), au moins partiellement, notamment au moins essentiellement, sur tout le pourtour de l'élément chauffant (55).

8. Dispositif selon la revendication 6 ou 7,
**caractérisé en ce que** le canal des dispositifs chauffants (40) et l'élément chauffant (55) des dispositifs chauffants (40) sont conçus pour que l'air dans le canal et dans l'élément chauffant (55) circule essentiellement dans des directions mutuellement opposées.

9. Dispositif selon l'une des revendications 1 à 8,
**caractérisé en ce que** l'on prévoit une unité de régulation (53) pour réguler un écoulement d'air à réchauffer vers l'élément chauffant (55) et, de préférence, **en ce que** l'unité de régulation (53) présente une fente annulaire avec un espace transversal d'écoulement librement variable.

10. Dispositif selon l'une des revendications 1 à 9,
**caractérisé en ce que** l'unité à buses (46) présente une fente (47) périphérique, notamment carrée ou rectangulaire, destinée à recevoir une extrémité d'une enveloppe d'emballage (6) et **en ce que** la fente (47) est délimitée par une paroi intérieure (65) avec des ouvertures (66) pour la sortie d'air chaud et/ou par une paroi extérieure (69) avec des ouvertures (70) pour la sortie d'air chaud.

11. Dispositif selon la revendication 10,
**caractérisé en ce que** l'ensemble de la surface d'ouverture formée par les ouvertures individuelles (66, 70) de la paroi intérieure et/ou extérieure (65, 69) est supérieure dans au moins une zone d'angle, notamment dans toutes les zones d'angle, de la fente (47) qu'à l'extérieur des zones d'angle.

12. Dispositif selon la revendication 10 ou 11,
**caractérisé en ce que** le contour (71) des ouvertures (66) de la paroi intérieure et/ou extérieure (65) est essentiellement en forme de V dans au moins une zone d'angle, notamment dans toutes les zones d'angle, de la fente (47).

13. Dispositif selon l'une des revendications 1 à 12,
**caractérisé en ce que** la largeur de la fente (47) est inférieure à 3 mm, notamment inférieure à 2 mm.

14. Procédé de mise en forme d'emballage (2), notamment d'emballages composites en carton,
- dans lequel respectivement une partie d'extrémité (10) de plusieurs enveloppes d'emballage (6) agencées sur différentes roues à mandrin (8) sont réchauffées en parallèle et au moins partiellement,
- dans lequel les parties d'extrémité (10) des enveloppes d'emballage (6) agencées sur différentes roues à mandrin (8) pour le réchauffement en parallèle et au moins partiellement, sont respectivement introduites, au moins partiellement, dans une fente (47) d'un dispositif chauffant (40) d'un dispositif (1) selon l'une des revendications 1 à 13, et sont soufflées dans la fente (47) avec de l'air chaud,
- dans lequel les parties d'extrémité (10) au moins partiellement réchauffées d'au moins deux enveloppes d'emballage (6) sont fermées par scellage, de préférence parallèlement,
- dans lequel de l'air à réchauffer est acheminé à au moins deux dispositifs chauffants (40) au moyen d'un dispositif d'alimentation en air (41), et
- dans lequel au moins deux dispositifs chauffants (40) sont maintenus, chacun séparément, au moyen d'au moins un support (49), sur le dispositif d'alimentation en air (41).
